Europäisches Patentamt

**European Patent Office**

Office européen des brevets

(11) Numéro de publication: **0 096 633**
**B1**

(12) **FASCICULE DE BREVET EUROPEEN**

(19)

(45) Date de publication du fascicule du brevet:
07.01.87

(21) Numéro de dépôt: 83401114.0

(22) Date de dépôt: 02.06.83

(51) Int. Cl.⁴: **B 65 G 65/24,** B 62 B 1/26

(54) Combinaison d'un fut sensiblement cylindrique et d'un chariot de redressement du dit fut.

(30) Priorité: 04.06.82 FR 8209753

(43) Date de publication de la demande:
21.12.83 Bulletin 83/51

(45) Mention de la délivrance du brevet:
07.01.87 Bulletin 87/2

(84) Etats contractants désignés:
BE CH DE GB IT LI NL

(56) Documents cités:
FR - A - 1 090 648
FR - A - 2 472 498
GB - A - 609 375
GB - A - 678 607
GB - A - 822 481
US - A - 2 077 349
US - A - 3 815 767

(73) Titulaire: **CHIMEX, 16, rue Maurice Berteaux Le Thillay,**
**F-95500 Gonesse (FR)**

(72) Inventeur: **Gele, Maurice, 74 Bis, rue Gabriel Péri Saint**
**Martin du Tertre, F-95270 Luzarches (FR)**

(74) Mandataire: **Peuscet, Jacques, Cabinet Peuscet 68, rue**
**d'Hauteville, F-75010 Paris (FR)**

## Description

La présente invention concerne la combinaison d'un fût sensiblement cylindrique et d'un chariot de redressement dudit fût, le fût étant notamment un fût de 200 litres utilisé de façon générale pour le transport des matières premières.

Les fûts cylindriques sont souvent déplacés par roulement autour de leur axe, par exemple dans les aires de stockage. Cependant, on les redresse souvent pendant le stockage afin qu'ils ne puissent pas se déplacer librement par simple roulement. Par ailleurs, même lorsque les fûts sont stockés horizontalement, on doit les redresser avant d'ouvrir l'orifice d'accès, qui est en général formé dans l'un des fonds.

Les fûts de 200 litres qui contiennent des produits chimiques ont habituellement un poids de l'ordre de 200 kg, trop important pour qu'ils puissent être normalement mis en position redressée par un seul ouvrier. C'est cette opération de redressement que concerne l'invention. Plus précisément, l'invention concerne un chariot de redressement de fûts cylindriques, particulièrement bien adapté au redressement des fûts cylindriques de 200 litres.

On a déjà proposé des chariots destinés à la manutention des fûts cylindriques ou analogues. Cependant, ces chariots sont généralement destinés au transport de ces fûts et non à leur redressement de la position dans laquelle leur axe est horizontal à la position dans laquelle leur axe est vertical. C'est ainsi que dans le brevet US-A 2 077 349, on a décrit un chariot de manutention de fût comprenant, d'une part, un châssis rigide, qui comporte une fourche sensiblement disposée dans un plan et un manche solidaire de ladite fourche, disposé selon une direction formant un angle avec le plan de la fourche, ledit manche étant incliné vers le côté opposé à l'ouverture de la fourche, d'autre part, deux roues principales sensiblement identiques, montées symétriquement sur le châssis, de part et d'autre de celui-ci, lesdites roues pouvant tourner autour d'un axe commun parallèle au plan de la fourche et distant de l'extrémité ouverte de ladite fourche et, enfin, deux patins de support disposés symétriquement à proximité des extrémités libres des dents de la fourche, les patins précités formant entre les dents de la fourche, à une certaine distance de l'axe commun de rotation des roues principales, des saillies susceptibles de prendre appui sur la paroi latérale d'un fût. Un tel chariot permet de soulever et de transporter un fût vertical mais ne permet pas d'amener le fût en position verticale quand il est initialement en position horizontale.

Le chariot de redressement de fûts selon l'invention met en oeuvre un double effet de levier permettant une réduction de la force de redressement. Le chariot est muni de roues si bien qu'il peut être amené à l'endroit d'utilisation sans effort notable.

L'invention a donc pour objet la combinaison d'un fût sensiblement cylindrique et d'un chariot pour la manutention dudit fût, ledit chariot étant du type ci-dessus défini à partir du brevet US-A 2 077 349; cette combinaison est caractérisée par le fait que les patins sont à une distance de l'axe commun de rotation des roues principales de l'ordre de la moitié de la hauteur du fût, et que les saillies constituées par lesdits patins sont susceptibles de prendre appui sur la paroi latérale du fût d'axe sensiblement horizontal, au-dessous de l'axe dudit fût, quand le chariot est amené en vis-à-vis d'une base du fût, lesdits patins permettant ensuite le redressement dudit fût, dans la position où son axe est sensiblement vertical quand une poussée est exercée sur le manche pour faire pivoter le châssis autour de l'axe commun des roues principales et faire avancer le chariot vers le fût par rotation de roulement des ses roues.

Dans l'état de la technique, on a déjà proposé un chariot de transport de récipients cylindriques comportant un châssis constitué d'une fourche et d'un manche, les extrémités de la fourche portant des patins formant saillie entre les dents de la fourche (voir brevet GB-A 678 607). Cependant, un tel chariot destiné au transport de bouteilles de gaz mises en position horizontale ne peut en aucun cas permettre le redressement de ces bouteilles en position verticale; cette impossibilité est due à des différences de structure importantes par rapport au chariot selon l'invention, notamment l'absence d'angle important entre le manche et la fourche et la faible distance entre patins et axe de roues vis-à-vis de la hauteur du récipient.

Il est avantageux que le diamètre des roues principales soit de l'ordre de 80 à 90% du diamètre des fûts cylindriques à redresser.

Dans un mode de réalisation avantageux, l'axe commun de rotation des roues est placé au-dessous du plan de la fourche.

Une réalisation très intéressante de l'invention comporte des patins de révolution montés rotatifs sur leurs axes, lesdits axes étant inclinés vers le bas par rapport au plan de la fourche. Les patins ont, par exemple, une forme tronconique.

Il est avantageux que le châssis comporte, en outre, un marchepied solidaire de la fourche et placé du côté opposé à l'ouverture de celle-ci. On peut prévoir que le manche comporte une poignée supérieure et une poignée intermédiaire; le manche peut aussi être sensiblement perpendiculaire au plan contenant l'axe commun de rotation des roues principales et les patins.

On préfère que le châssis comporte deux roulettes arrière disposées au-dessous de la partie de la fourche qui est la plus éloignée des patins, ces roulettes étant destinées, par contact avec le sol, à limiter le basculement du chariot dans un premier sens autour de l'axe commun des roues. On peut aussi prévoir que deux roulettes avant portées par la fourche au-dessous du plan de celle-ci et au voisinage des patins, limitent le basculement du châssis dans un deuxième sens, autour de l'axe commun des roues, par contact avec le sol avant que les patins ne touchent le sol si leurs axes sont inclinés vers le bas par rapport au plan de la fourche.

L'invention concerne donc une combinaison dont le chariot comporte un châssis très robuste; les seules parties mobiles sont, d'une part, les roues principales et, le cas échéant, les patins lorsqu'ils sont montés sur des axes et, d'autre part, les roulettes avant et arrière qui ne participent pas aux fonctions essentielles du chariot et rendent simplement plus commode son utilisation.

Pour mieux faire comprendre l'objet de l'invention, on va décrire maintenant, à titre d'exemple purement illustratif et non limitatif, un mode de réalisation représenté sur le dessin annexé.

Sur ce dessin:

– la fig. 1 est une élévation en bout du chariot de redressement de la combinaison selon l'invention, vue du côté où se trouve le manche du chariot;
– la fig. 2 est une coupe selon II-II de la fig. 1;
– la fig. 3 est une vue en plan du chariot des figures 1 et 2; et
– la fig. 4 est un schéma représentant la disposition géométrique des éléments essentiels du chariot et d'un fût lors du redressement de ce fût.

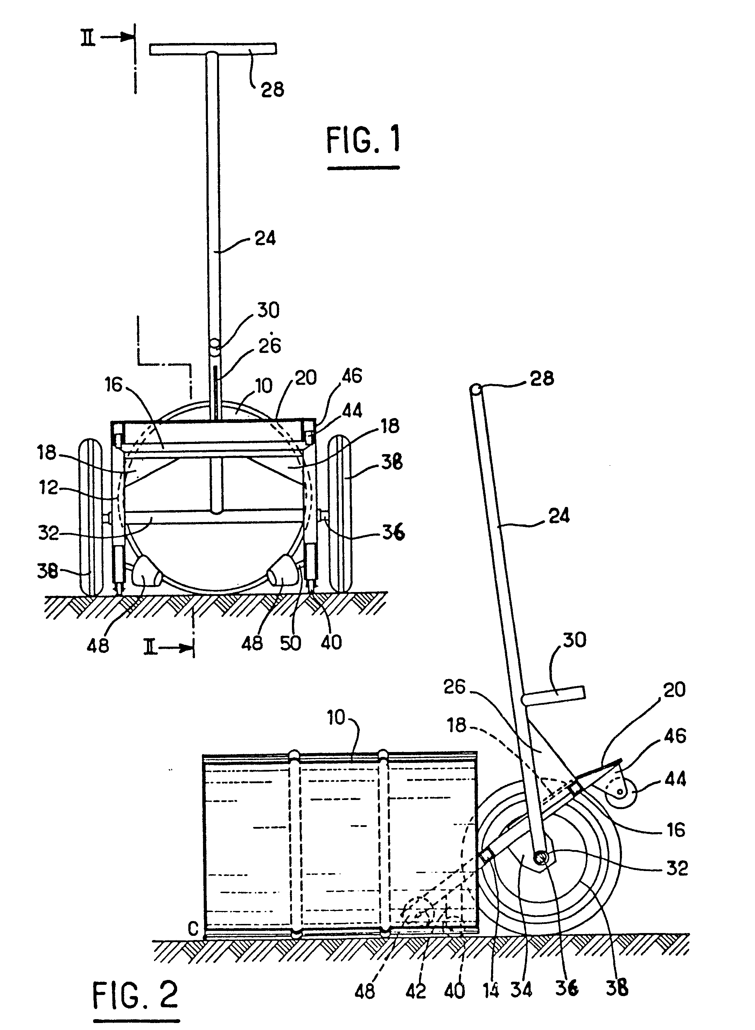

Les figures 1 à 3 représentent schématiquement un mode de réalisation du chariot de la combinaison selon l'invention. Ce chariot est destiné à soulever des fûts cylindriques de 200 litres tels que le fût 10 représenté.

Le chariot comporte un châssis formé de plusieurs éléments solidaires les uns des autres, par exemple soudés. Le châssis comprend une fourche qui comporte deux dents 12 reliées par deux traverses 14, 16. La fourche est avantageusement formée de tubes de section carrée ayant une grande rigidité et cependant un faible poids. Cette rigidité est avantageusement accrue par des goussets 18 soudés dans les angles entre les dents 12 et la traverse 16.

Un marchepied 20, avantageusement formé d'une plaque d'acier «à larmes» est fixé, par exemple par soudage, à l'arrière de la fourche, c'est-à-dire au voisinage de la traverse 16 et à l'opposé de l'extrémité ouverte de la fourche. Le marchepied 20 prolonge la fourche si bien que celle-ci et le marchepied se trouvent pratiquement dans un même plan.

Le châssis comporte aussi un manche 24. Comme représenté sur la figure 2, ce manche forme un angle avec le plan de la fourche; il est incliné vers l'arrière, c'est-à-dire vers le marchepied 20. Ce manche 24, avantageusement formé d'un tube de section circulaire, est soudé à un gousset 26, qui est lui-même soudé sur la traverse 16. Le manche 24 comporte avantageusement une poignée supérieure 28 en T et une poignée intermédiaire 30. La partie inférieure du manche 24 est soudée sur un tube 32 qui traverse des équerres 34 de support elles-mêmes soudées aux dents 12 de la fourche. De cette manière, les équerres 34, les dents 12 de la fourche, le tube 32 et le manche 24 forment une structure rigide, destinée à être supportée par un axe 36. Il faut noter que la poignée 28 en T est avantageusement sensiblement parallèle au tube 32 alors que la poignée intermédiaire 30 lui est perpendiculaire.

Le chariot est monté sur deux roues principales 38 fixées sur l'essieu ou axe commun 36, qui est parallèle au plan de la fourche.

La partie antérieure des dents 12 est munie de roulettes 40 portées par des supports 42 disposés au-dessous du plan de la fourche. Comme le montre la figure 2, le contact des ces roulettes 40 avec le sol empêche un basculement excessif du châssis vers l'avant. Le châssis porte aussi des roulettes arrière 44, montées dans des chapes 46 fixées au châssis au droit du marchepied 20. Ces roulettes 44 sont destinées à limiter le basculement du chariot vers l'arrière, lors du fonctionnement, comme décrit dans la suite du présent mémoire.

Enfin, comme le montrent clairement les figures 1 à 3, les extrémités avant des dents 12 de la fourche portent des patins 48. Dans l'exemple considéré, ces patins sont formés de troncs de cône de caoutchouc dur, ayant un alésage central leur permettant de tourner autour d'axes 50 fixés aux dents 12. Il est avantageux que les axes 50 soient inclinés vers le bas et vers l'intérieur des dents de la fourche, comme représenté, afin que les patins aient une surface étendue de contact avec le fût à redresser. Cependant, cete caractéristique n'est pas indispensable, les patins pouvant être fixes ou avoir diverses autres configurations.

On considère maintenant, en se référant à la figure 2, les diverses opérations exécutées pendant le redressement d'un fût. La position de départ est celle, qui est représentée sur les figures 1 à 3. On note sur ces figures que le chariot est poussé vers le fût 10 pratiquement jusqu'à ce que la traverse 14 soit au contact de son extrémité. Ce déplacement s'effectue par roulement sur les roues principales 38 et sur les roulettes avant 40. Dans cette position, les patins 48 sont très voisins de la surface du fût 10. Le chariot est avantageusement amené dans cette position par un opérateur, qui tient le manche 24 d'une part suivant sa longueur et d'autre part par la poignée 30. L'opérateur saisit ensuite la poignée supérieure 28 avec les deux mains et place un pied sur le marchepied 20. Le pied de l'opérateur est destiné à empêcher le recul du chariot pendant que l'opérateur exerce une force dirigée vers l'arrière, c'est-à-dire à droite sur la figure 2, sur la poignée 28.

Le basculement du manche 24 vers l'arrière provoque le soulèvement des patins 48 et du fût 10, lequel pivote autour du point C de contact avec le sol de l'arête du fond opposé à celui qui est soulevé. Le fût est ainsi redressé jusqu'à ce qu'il bascule sur son fond.

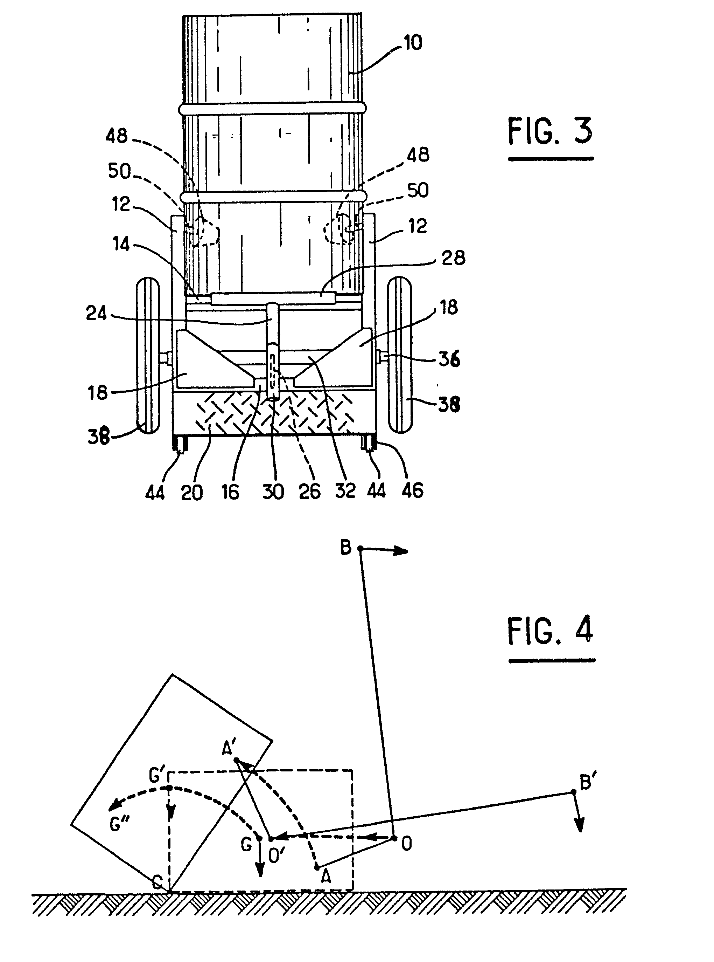

Plus précisément, la figure 4 permet une meilleure compréhension de ces diverses opérations. Sur la figure 4, on a simplement représenté par la référence 0 l'axe commun de rotation des roues, c'est-à-dire l'essieu 36, par la référence A le point de contact des patins 48 avec la surface du fût, et par la référence B la poignée 28 que saisit l'opérateur. En fait, l'ensemble des opérations s'effectue par rotation du châssis autour de l'axe de rotation des roues 36, c'est-à-dire autour du point 0. Cependant, comme le chariot peut rouler, le point 0 se déplace jusqu'au point 0' pendant le redressement. En même temps que l'axe commun 0 se déplace vers le point 0', l'opérateur fait basculer le manche 24 c'est-à-dire que le point B se rapproche du point B'. La force appliquée ainsi en B provoque le passage du point A de contact des patins avec le fût jusqu'au point A'. Le trajet parcouru par le point A est un arc de cercle centré sur le point C puisque le fût bascule autour d'une arête. Pendant ce mouvement, le centre de gravité G du fût se déplace suivant un trajet tel que GG'G" qui n'est pas exactement un arc de cercle mais qui s'en rapproche, du fait que la partie du fût, qui ne contient pas de matières premières, se déplace au cours du redressement.

Le vecteur OA, reliant l'axe commun de rotation au point de contact avec le fût, vient donc prendre la position O'A' au moment où le centre de gravité atteint la position G' au-delà de laquelle le fût a tendance à se redresser de lui-même. En conséquence, il suffit que le chariot soulève le fût jusqu'à ce qu'il prenne la position représentée en traits pleins sur la figure 4.

On note ainsi que le manche 24 a avantageusement une grande longueur. En effet, le bras de levier de la résistance appliquée par le fût est représenté par le vecteur OA alors que le bras de levier de la force appliquée par l'opérateur est représenté par le vecteur OB. En conséquence, le rapport de démultiplication est égal au rapport des modules de ces deux vecteurs. Dans le mode de réalisation représenté, le vecteur de démultiplication est égal à 3,5 environ.

Le chariot donne cependant un autre facteur de démultiplication. En effet, le centre de gravité G du fût se trouve à mi-distance entre ses deux extrémités lorsque le fût est à plat comme indiqué en traits interrompus sur la figure 4. Le point A de contact des patins est bien plus éloigné du point C de rotation que le centre de gravité G. On obtient donc un second facteur de démultiplication égal au rapport des projections au sol des vecteurs AC et GC; dans le mode de réalisation considéré, il est égal à 1,42. En conséquence, le rapport global de démultiplication obtenu est égal à 1,42×3,5, c'est-à-dire 5.

En réalité, les facteurs de démultiplication sont plus importants car l'opérateur exerce sa force perpendiculairement au manche alors que le poids et ses composantes sont toujours appliqués verticalement, c'est-à-dire dans une direction qui n'est pas perpendiculaire au bras de levier. Le facteur réel de démultiplication est en fait de 6 à 7 au moment où l'opérateur exerce la force la plus grande.

Dans l'exemple particulier considéré, on obtient les différents résultats indiqués lorsque le diamètre des roues principales est de l'ordre de 80 à 90% de celui des fûts à redresser. La distance des patins à l'axe commun de rotation des roues est de l'ordre de la moitié de la hauteur des fûts. Le manche est presque perpendiculaire au plan qui contient l'axe commun de rotation 36 des roues 38 et les patins 48 (angle d'environ 110°).

La description qui précède montre l'avantage présenté par le marchepied 20 et les roulettes 40 et 44. Le marchepied 20 empêche le recul du chariot lorsque l'opérateur commence à appliquer une force vers l'arrière au manche 24. Les roulettes 40 permettent de positionner les patins 48 contre la surface externe du fût 10, sans que l'opérateur ait à régler avec précision l'inclinaison du châssis. Enfin, les roulettes 44 limitent le basculement vers l'arrière de manière que les patins 48 ne dépassent pas de façon importante la position pour laquelle le fût se redresse tout seul, c'est-à-dire la position correspondant au point A' sur la fig. 4.

On a indiqué précédemment que l'ensemble du châssis était formé par des éléments soudés, avantageusement an acier. Cependant, ces éléments peuvent être formés de toute matière convenable du moment qu'ils possèdent la résistance mécanique suffisante, compte tenu des fûts particuliers à redresser.

On a indiqué que les patins 48 étaient formés d'éléments tronconiques rotatifs. Cependant, il n'est pas indispensable que ces éléments soient rotatifs ni qu'ils soient tronconiques. Il suffit qu'ils forment une surface relativement étendue d'appui contre la surface du fût afin que celle-ci ne risque pas d'être détériorée.

**Revendications**

1. Combinaison d'un fût sensiblement cylindrique (10) et d'un chariot pour la manutention dudit fût, ledit chariot comprenant:
d'une part, un châssis rigide, qui comporte une fourche (12, 14, 16) sensiblement disposée dans un plan et un manche (24) solidaire de ladite fourche, ledit manche étant disposé selon une direction formant un angle avec le plan de la fourche et étant incliné vers le côté opposé à l'ouverture de la fourche,
d'autre part, deux roues principales (38) sensiblement identiques, montées symétriquement sur le châssis, de part et d'autre de celui-ci, lesdites roues pouvant tourner autour d'un axe commun (36) parallèle au plan de la fourche et distant de l'extrémité ouverte de ladite fourche,
et, enfin, deux patins (48) de support disposés symétriquement à proximité des extrémités libres des dents (12) de la fourche et formant des saillies entre lesdites dents, caractérisée par le fait que les patins (48) sont à une distance de l'axe commun de rotation (36) des roues principales (38) de l'ordre de la moitié de la hauteur du fût (10), et que les saillies constituées pas lesdits patins sont susceptibles de prendre appui sur la paroi latérale du fût (10) d'axe sensiblement horizontal, au-dessous de l'axe dudit fût, quand le chariot est amené en vis-à-vis d'une base du fût, lesdits patins (48) permettant ensuite le redressement dudit fût dans la position où son axe est sensiblement vertical quand une poussée est exercée sur le manche (24) pour faire pivoter le châssis autour de l'axe commun (36) des roues principales (38) et faire avancer le chariot vers le fût (10) par rotation de roulement de ses roues (38).

2. Combinaison selon la revendication 1, caractérisée par le fait que le diamètre des roues principales (38) est d'environ 80 à 90% du diamètre du fût à redresser.

3. Combinaison selon l'une des revendications 1 ou 2, caractérisée par le fait que l'axe commun (36) des roues principales (38) est disposé au-dessous du plan de la fourche (12, 14, 16).

4. Combinaison selon l'une des revendications 1 à 3, caractérisée par le fait que les patins (48) ont une forme de révolution et sont montés rotatifs autour de leurs axes, lesdits axes étant inclinés vers le bas par rapport au plan de la fourche.

5. Combinaison selon l'une des revendications 1 à 4, caractérisée par le fait que les patins (48) ont une forme tronconique.

6. Combinaison selon l'une des revendications 1 à 5, caractérisée par le fait que le manche (24) est sensiblement perpendiculaire au plan contenant l'axe commun de rotation des roues principales (38) et les patins (48).

7. Combinaison selon l'une des revendications 1 à 6, caractérisée par le fait que le châssis comporte un marchepied (20) solidaire de la fourche (12, 14, 16) et placé du côté opposé à l'ouverture de celle-ci.

8. Combinaison selon l'une des revendications 1 à 7, caractérisée par le fait qu'il comporte deux roulettes arrière (44) disposées au-dessous de la partie de la fourche (12, 14, 16), qui est la plus éloignée des patins (48), ces roulettes étant destinées, par contact avec le sol, à limiter le basculement du chariot dans un premier sens autour de l'axe commun des roues (38).

9. Combinaison selon les revendications 4 et 8 prises simultanément, caractérisée par le fait qu'il comporte deux roulettes avant (40) portées par la fourche (12, 14, 16) au-dessous du plan de celle-ci et au voisinage des patins (48), ces roulettes limitant le basculement dans un deuxième sens autour de l'axe commun (36) des roues (38) par contact avec le sol, avant que les patins (48) ne touchent le sol.

10. Combinaison selon l'une des revendications 1 à 9, caractérisée par le fait que le manche (24) comporte une poignée supérieure (28) et une poignée intermédiaire (30).

## Patentansprüche

1. Kombination aus einer im wesentlichen zylindrischen Tonne (10) und einem Wagen für die Handhabung dieser Tonne, wobei der Wagen aufweist:

erstens, ein festes Fahrgestell, das eine Gabel (12, 14, 16), die im wesentlichen in einer Ebene angeordnet ist, und einen Griff (24), der mit der Gabel verbunden ist, aufweist, wobei dieser Griff in einer Richtung angeordnet ist, welche einen Winkel mit der Ebene der Gabel aufweist und zu der der Öffnung der Gabel abgewandten Seite hin geneigt ist,

zweitens, zwei im wesentlichen identische Haupträder (38), die symmetrisch auf beiden Seiten des Fahrgestells montiert sind, wobei die Räder um eine gemeinsame Achse (36) drehen können, die parallel mit der Ebene der Gabel läuft und vom offenen Ende der Gabel beabstandet ist, und

drittens, zwei Tragsegmente (48), die symmetrisch in der Nähe der freien Enden der Zinken (12) der Gabel angeordnet sind und zwischen diesen Zinken Vorsprünge bilden, dadurch gekennzeichnet, dass die Tragsegmente (48) einen Abstand von der gemeinsamen Drehachse (36) der Haupträder (38) besitzen, welcher in etwa der Hälfte der Höhe der Tonne (10) entspricht, und dass die aus den Tragsegmenten bestehenden Vorsprünge gegen die Seitenwand der Tonne (10) mit im wesentlichen horizontaler Achse unterhalb der Achse dieser Tonne in Anschlag kommen, wenn sich der Wagen gegenüber einer Grundfläche der Tonne befindet, wobei die Tragsegmente (48) dann das Aufrichten dieser Tonne in die Lage ermöglichen, in der ihre Achse im wesentlichen vertikal verläuft, wenn eine Kraft auf den Griff (24) ausgeübt wird, um den Wagen um die gemeinsame Achse (36) der Haupträder (38) zu drehen und um den Wagen durch Drehrollen der Räder (38) zur Tonne (10) hin zu bewegen.

2. Kombination nach Anspruch 1, dadurch gekennzeichnet, dass der Durchmesser der Haupträder (38) etwa 80 bis 90% des Durchmessers der aufzurichtenden Tonne beträgt.

3. Kombination nach einem der Ansprüche 1 oder 2, dadurch gekennzeichnet, dass die gemeinsame Achse (36) der Haupträder (38) unterhalb der Ebene der Gabel (12, 14, 16) angeordnet ist.

4. Kombination nach einem der Ansprüche 1 bis 3, dadurch gekennzeichnet, dass die Tragsegmente (48) die Form eines Revolutionskörpers besitzen und drehbar um ihre Achsen angeordnet sind, wobei diese Achsen bezüglich der Ebene der Gabel nach unten geneigt sind.

5. Kombination nach einem der Ansprüche 1 bis 4, dadurch gekennzeichnet, dass die Tragsegmente (48) kegelstumpfförmig ausgebildet sind.

6. Kombination nach einem der Ansprüche 1 bis 5, dadurch gekennzeichnet, dass der Griff (24) im wesentlichen senkrecht zu der Ebene, gebildet aus gemeinsamer Drehachse der Haupträder (38) und Tragsegmenten (48), angeordnet ist.

7. Kombination nach einem der Ansprüche 1 bis 6, dadurch gekennzeichnet, dass der Wagen eine Trittplatte (20) aufweist, die mit der Gabel (12, 14, 16) fest verbunden ist und gegenüber deren Öffnung angeordnet ist.

8. Kombination nach einem der Ansprüche 1 bis 7, dadurch gekennzeichnet, dass der Wagen zwei Hinterröllchen (44) aufweist, die unter demjenigen Abschnitt der Gabel (12, 14, 16) angeordnet sind, der am weitesten von den Tragsegmenten (48) entfernt ist, wobei die Röllchen das Kippen des Wagens in eine Richtung um die gemeinsame Achse der Räder (38) durch Kontakt mit dem Boden begrenzen.

9. Kombination nach den Ansprüchen 4 und 8 gemeinsam, dadurch gekennzeichnet, dass der Wagen zwei Vorderröllchen (40) aufweist, die von der Gabel (12, 14, 16) unter deren Ebene und in der Nähe der Tragsegmente (48) gehalten sind, wobei diese Röllchen das Kippen in die andere Richtung um die gemeinsame Achse (36) der Räder (38) durch Kontakt mit dem Boden begrenzen, bevor die Tragsegmente (48) den Boden berühren.

10. Kombination nach einem der Ansprüche 1 bis 9, dadurch gekennzeichnet, dass der Griff (24) einen oberen Handgriff (28) und einen mittleren Handgriff (30) aufweist.

## Claims

1. Combination of a substantially cylindrical drum (10) and of a carriage for the manipulation of the said drum, the said carriage comprising:

on the one hand, a rigid frame, which includes a fork (12, 14, 16) which is substantially disposed in a plane and a shaft (24) forming a solid unit with the said fork, the said shaft being disposed in a direction forming an angle with the plane of the fork and being inclined towards the side opposite to the opening of the fork,

on the other hand, two principal wheels (38) which are substantially identical and which are mounted symmetrically on the frame, on each side of the latter, the said wheels being able to turn about a common axis (36) parallel to the plane of the fork and at a distance from the open end of the said fork,

and, finally, two supporting runners (48) disposed symmetrically close to the free ends of the prongs (12) of the fork and forming projections between the said prongs, characterized in that the runners (48) are at a distance from the common axis of rotation (36) of the principal wheels (38) of the order of one-half of the height of the drum (10), and in that the projection formed by the said runners are capable of being supported on the lateral wall of the drum (10) having a substantially horizontal axis, below the axis of the said drum, when the carriage is brought opposite to a base of the drum, the said runners (48) then permitting the erection of the said drum into the position in which its axis is substantially vertical when a pressure is exerted on the shaft (24) in order to cause the frame to pivot about the common axis (36) of the principal wheels (38) and to cause the carriage to advance towards the drum (10) by rolling rotation of its wheels (38).

2. Combination according to Claim 1, characterized in that the diameter of the principal wheels (38) is approximately 80 to 90% of the diameter of the drum to be erected.

3. Combination according to one of Claims 1 or 2, characterized in that the common axis (36) of the principal wheels (38) is disposed below the plane of the fork (12, 14, 16).

4. Combination according to one of Claims 1 to 3, characterized in that the runners (48) have a shape of revolution and are rotatably mounted about their axes, the said axes being inclined towards the base in relation to the plane of the fork.

5. Combination according to one of Claims 1 to 4, characterized in that the runners (48) have a thrustoconical shape.

6. Combination according to one of Claims 1 to 5, characterized in that the shaft (24) is substantially perpendicular to the plane containing the common axis of rotation of the principal wheels (38) and the runners (48).

7. Combination according to one of Claims 1 to 6, characterized in that the frame includes a step (20) forming a solid unit with the fork (12, 14, 16) and placed on the side opposite to the opening of the latter.

8. Combination according to one of Claims 1 to 7, characterized in that it includes two rear castors (44) disposed below the part of the fork (12, 14, 16) which is furthest from the runners (48), these castors being intended, by contact with the ground, to limit the rocking of the carriage in a first direction about the common axis of the wheels (38).

9. Combination according to Claims 4 and 8 taken together, characterized in that it includes two front castors (40) carried by the fork (12, 14, 16) below the plane of the latter and in the vicinity of the runners (48), these castors limiting the rocking in a second direction about the common axis (36) of the wheels (38) by contact with the ground, before the runners (48) touch the ground.

10. Combination according to one of Claims 1 to 9, characterized in that the shaft (24) includes an upper handle (28) and an intermediate handle (30).

0 096 633

FIG. 1

FIG. 2

7

FIG. 3

FIG. 4